# EUROPEAN PATENT APPLICATION

(11) **EP 1 541 623 A1**
(43) Date of publication of application: **15.06.2005**
(21) Application number: 04027590.1
(22) Date of filing: 19.11.2004
(51) Int. Cl.: C08K 3/00, C08K 9/02, B65D 1/00

(54) **Photoprotective composition for food containers**

(30) Priority: 21.11.2003 IT MO20030315
(71) Applicant: Granarolo S.P.A., 40127 Bologna (BO) (IT)
(72) Inventor: Bombardieri, Raffaele, 40059 Medicina (BO) (IT); Borsari, Andrea, 40100 Bologna (IT); Tonelli, Claudia, 40127 Quarto Inferiore (BO) (IT)
(74) Representative: Crugnola, Pietro

(57) **Abstract**

Photoprotective composition mixable with plastic matter and comprising: a white pigment, aluminium powder, a black pigment, a pearlescent pigment; food product container, made from a coloured material protecting said product from light radiation, characterised in that said material is made opaque to said radiation by a composition comprising a white pigment, aluminium powder, a black pigment, a pearlescent pigment.

## Description

The invention relates to a container for food products, in particular milk, made from milk and fruit juices.

In the field of packaging milk and derived products, using plastic matter such as single-wall PET (terephthalate polyethylene, Food Grade) is known to make containers that enable a pleasant product presentation to be combined with effective conservation of the hygienic and organoleptic parameters of the product.

A significant problem connected with the production and distribution of milk consists of giving the latter a shelf-life (or durability) that is as long as possible at a given storage temperature. This in fact means extending the time limit within which modifications such as biochemical modifications that occur in the product remain imperceptible to the senses of a consumer or are still acceptable in hygienic and nutritional terms.

Packaged fresh pasteurised milk has a limited shelf-life that is about 6 days if stored in refrigerator. The milk is significantly sensitive to light, in particular to the visible component of the latter (λ 380-780 nm), that is able to oxidise photosensitive substances in the product, such as for example riboflavin (vitamin B2), an indispensable nutrient for cell metabolism. As foodstuffs such as milk and the corresponding derivates constitute an important source of riboflavin, the loss through photooxidation of the latter depletes the nutritional profile of these foodstuffs. Furthermore, chemical reactions in the riboflavin and other natural constituents cause unpleasant odours to arise.

Such an event may for example occur if it is desired to package milk and/or its derivates in conventional clear containers. The latter are made from preforms, in clear single-wall PET that is given its definitive shape, for example a bottle, by means of blowing. As conventional adequately protect their contents from ambient light (sunlight and/or artificial light).

To overcome this drawback, containers in coloured semitransparent PET have been proposed that protect fresh microfiltered milk from photooxidation and enable its shelf-life to be extended up to 10-13 days.

An object of the invention is to improve containers for use with foodstuffs.

Another object of the invention is to improve the containers used to package milk and/or milk-based products and fruit juices.

A further object of the invention is to provide a container for milk and/or milk-based products that enables the shelf-life of the latter to be extended.

Another further object of the invention is to provide a container that enables the nutrient substances contained in the milk to be effectively protected from photooxidising processes.

In a first aspect of the invention, there is provided a photoprotective composition mixable with plastic matter and comprising: a white pigment, aluminium powder, a black pigment, a pearlescent pigment.

In a second aspect of the invention, there is provided a food product container, made from a coloured material protecting said product from light radiation, characterised in that said material is made opaque to said radiation by a composition comprising a white pigment, aluminium powder, a black pigment, a pearlescent pigment.

Owing to these aspects, it is possible to make containers, for example PET bottles, in which the milk reaches a shelf-life that is significantly longer than what is obtainable by means of other known clear containers. In fact, by using the appropriately dosed mixture of pigments provided for by the invention a coloured PET can be produced with which it is possible to make containers for use with foodstuffs. The latter are coloured in aluminium grey that in addition to being aesthetically pleasing gives the containers significant photoprotective efficacy against the radiation comprised within the visible light spectrum and thus enables better conservation of the photosensitive nutrients of the milk such as the previously mentioned riboflavin.

Furthermore, there are no negative sensorial alterations to the refrigerated milk due to the so-called "light flavour".

The durability of the milk is thus determined only by the quantity of microbes in the milk after the technological procedures and not by the effect of the duration of exposure to ambient light, as occurs with transparent containers.

Durability of up to approximately 10 days can thus be achieved for pasteurised milk; highly pasteurised milk (or milk pasteurised at high temperature) can achieve an extended shelf-life of up to about 21-23 days.

The table below shows the average percentage formula for a colouring mixture according to the invention:

| **ingredient:** | **% range in weight** |
|---|---|
| White pigment (titanium dioxide) | 1-25 |
| Pearlescent pigment | 4-55 |
| Aluminium powder | 0.5-15 |
| Black pigment (carbon black) | 0.01-2 |
| Castor oil | as required |

In one embodiment, the average percentage formula is thus defined:

| **ingredient:** | **% in weight** |
|---|---|
| White pigment (titanium dioxide) | 6.0 |
| Pearlescent pigment | 35.0 |
| Aluminium powder | 3.4 |
| Black pigment (carbon black) | 0.1 |
| Castor oil | 55.5 |

The castor oil indicated in the table acts as a binder and vehicle for the pigments, thus giving the mixture the required homogeneity and can be effectively replaced by rape oil or other emulsifying agents.

The photoprotective effect that is achievable by using the composition, i.e. the colouring mixture disclosed here, depends on the quantity of composition added to the plastic matter (Food Grade terephthalate polyethylene) with which the bottles are manufactured. It is possible to use a plastic matter (Food Grade terephthalate polyethylene) containing a composition percentage comprised in a range of 0.5 - 6.0 %, depending on the shelf-life that is to be reached.

In an embodiment, satisfactory results are achieved using a value equal to 2.5%.

## Claims

1. Photoprotective composition mixable with plastic matter and comprising: a white pigment, aluminium powder, a black pigment, a pearlescent pigment.

2. Composition according to claim 1 and further comprising a vehicle for each of said pigments.

3. Composition according to claim 2, having a percentage formula comprising:
white pigment 1-25 %
pearlescent pigment 4-55 %
aluminium powder 0.5-15 %
black pigment 0.01-2 %
vehicle as required

4. Composition according to claim 3, wherein said white pigment has a percentage value of 6.0.

5. Composition according to claim 3, or 4, wherein said pearlescent pigment has a percentage value of 35.0.

6. Composition according to any one of claims 3 to 5, wherein said aluminium powder has a percentage value of 3.4.

7. Composition according to any one of claims 3 to 6, wherein said black pigment has a percentage value of 0.1.

8. Composition according to any one of claims 3 to 7, wherein said vehicle has a percentage value of 55.5.

9. Composition according to any preceding claim, wherein said white pigment is titanium dioxide.

10. Composition according to any preceding claim, wherein said black pigment is carbon black.

11. Composition according to any one of claims 2 to 10, wherein said vehicle is selected from a group comprising: castor oil, rape oil.

12. Plastic matter, comprising a base polymer material and a colouring agent, **characterised in that** said colouring agent comprises a composition according to any one of claims 1 to 11.

13. Plastic matter according to claim 12, wherein said composition is comprised in a range from 0.5 to 6 %.

14. Plastic matter according to claim 13, wherein said composition is 2.5 %.

15. Container of a food product, made from a coloured material protecting said product from light radiation, **characterised in that** said material is made opaque to said radiation by a composition according to any one of claims 1 to 11.

16. Container according to claim 15, wherein said coloured material comprises plastic matter.

17. Container according to claim 16, wherein said plastic matter comprises PET (Food Grade Terephthalate Polyethylene).

18. Container according to claim 16, or 17, wherein said composition is comprised in a range from 0.5 to 6 %.

19. Container according to claim 18, wherein said composition is 2.5 %.
